# EUROPEAN PATENT SPECIFICATION

(11) **EP 1 686 050 B1**
(45) Date of publication and mention of the grant of the patent: **02.09.2009**
(21) Application number: 05001699.7
(22) Date of filing: 27.01.2005
(51) Int. Cl.: B62J 1/14, B62J 1/28, B62J 1/12

(54) **Structure of a rear seat for motorcycles**
Hintersitzstruktur für Motorrad
Structure de siège arrière pour motocyclette

(43) Date of publication of application: 02.08.2006
(73) Proprietor: Kwang Yang Motor Co., Ltd., San-Min Dist., Kaohsiung City (TW)
(72) Inventor: Yu, Cheng-Wen, San-Min District Kaohsiung City (TW); Chen, Jung-Chung, San-Min District Kaohsiung City (TW); Ko, Shih-Chih, San-Min District Kaohsiung City (TW)
(74) Representative: Horak, Michael

(56) References cited:
- CA-A1- 2 304 455
- FR-A- 2 802 155
- FR-A- 2 820 475
- GB-A- 2 360 985
- US-A- 5 558 260
- US-B1- 6 332 621
- PATENT ABSTRACTS OF JAPAN vol. 2003, no. 12, 5 December 2003 (2003-12-05) & JP 2004 330984 A (HONDA MOTOR CO LTD), 25 November 2004 (2004-11-25)

## Description

### BACKGROUND OF THE INVENTION

### 1. Field of the Invention

This invention is related to the structure of a rear seat for motorcycles, and in particular to one which can be adjusted in position thereby providing convenience in use.

### 2. Description of the Prior Art

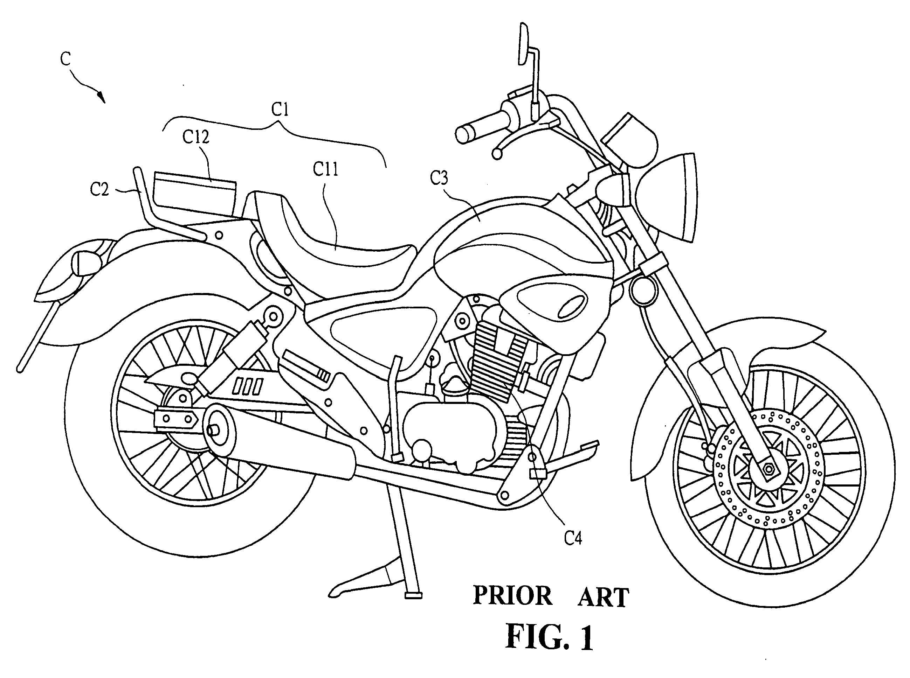

As shown in FIG 1, In addition to its riding functions, the motorcycle C can be used for carrying articles. As indicated in the drawing, the gas tank 3C of the motorcycle C has underneath it the power unit C4, and to facilitate the carrying of articles, a rack C2 is placed at the rear of seat C 1. In order to provide more canying capacity for rack C2, the seat C 1 is divided into the front seat C11 and rear seat C12, with the rear seat C12 being adjustable, to provide more space for the rack C2.

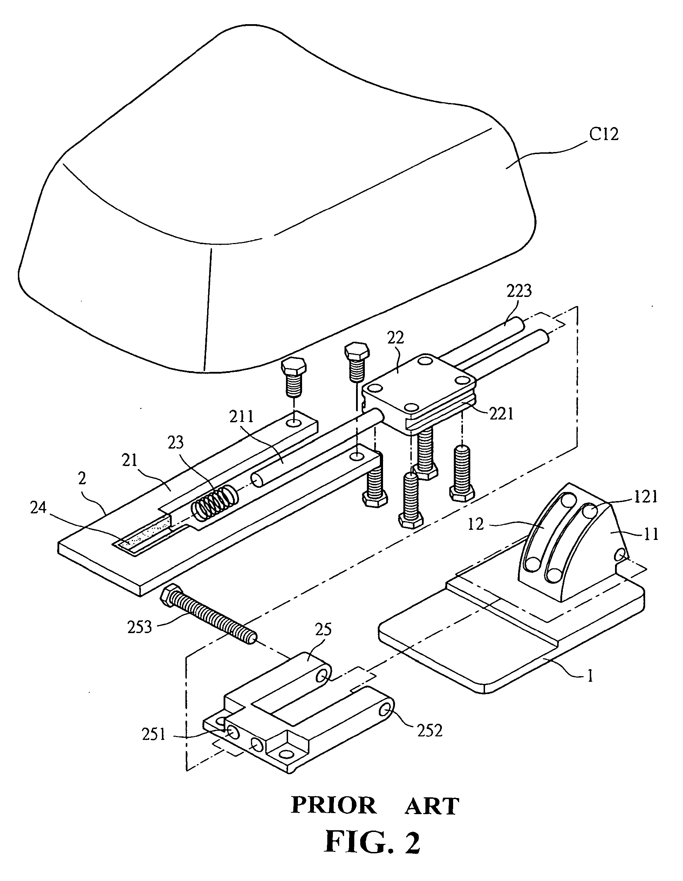

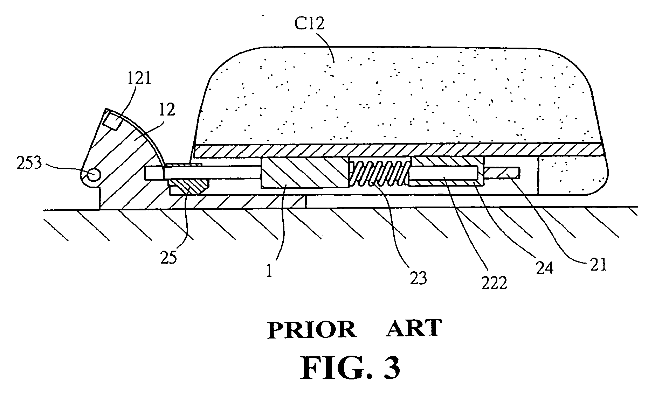

Hence, an adjustable rear seat C12 has been designed and developed to meet this need. As shown in FIG 2, a fixing plate 1 has at one end a curved surface angular mounting 11, on which there are at least two facing grooves 12 having positioning holes 121 on both ends. The positioning unit 2 is comprised of a pivot plate 21, a positioning plate 22, springs 23, a sleeve 24 and a pivot block **25.** The pivot plate 21 is a U-shaped member on one end of which there is an open slot for inserting a positioning plate 22 which can be fixed to the seat. The sides of positioning plate 22 are adapted to hold grooves 221 that correspond to the thickness of the pivot plate 21. On one end of the positioning plate there is a fixed rod 211 that will go through springs 23, and on the other end there are at least two fixing rods 223 extended away from the open slot. In the open slot the positioning rod 211 can extend through a sleeve 24 and the springs 23 on the positioning rod 211 can reach the end of tube 24. The pivot block 25 is a U-shaped member, positioned against the end of fixing rod 223 of positioning plate 22 through the holes 251. Thus, by joining the pivot block 25 with positioning plate 21 at the open slot, and extending the fixing rods 223 through holes 251, the positioning plate 22 can be prevented from separating from the opening slot, and by making the pivot holes 252 at one end of the pivot block 25, it allows the pivot screw 253 to extend through the side of positioning seat 11 of the fixed plate 1. The seat is a soft cushion, which can be used as a backrest or as a seating cushion as required. Referring to FIGS. 2 and 3, the positioning unit 2 is installed on the top of the fixing plate 1, and can turn and rotate along with each other. This strengthens the joining of the seat and the positioning plate 22 of the positioning unit 2, and the movement of the positioning plate 22 is limited by the pivot block 25 to allow it to slide around only within the open slot. The fixing 223 extends through the pivot holes 251 of the pivot block 25 resting by the positioning holes 121 on the grooves 12 of the fixing plate 1, thereby fixing the fixing plate 1 together with the seat on the motorcycle.

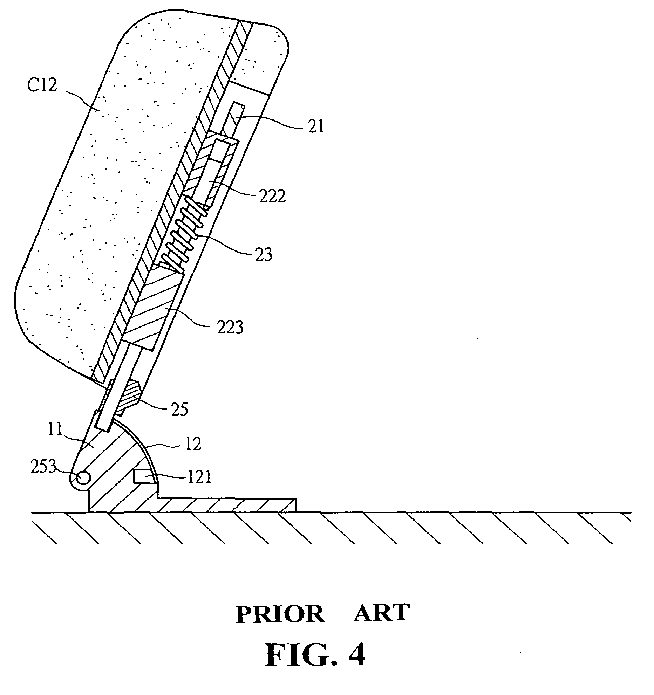

In practice, as shown in FIGS. 3 and 4, by pulling the seat, the fixing plate 22 can be moved along the open slot. The positioning rod 211 of positioning plate 22 fits into the tube 24, and the springs 23 are compressed by the positioning plate 22, thereby simultaneously lifting the fixing rod 223 away from the positioning hole 121 of the groove 12. At this time, the fixing rod 223 remains partially inside the groove 12 and can turn and rotate along with the fixing plate 1. While moving, the fixing rod 223 can slide along groove 12 to another positioning hole 121 and through the force of springs 23 of the positioning unit 2 and bounce into the positioning hole 121, thereby allowing the seat to remain in a fixed upright position for resting.

To return the seat to use, the seat is lifted so that the positioning rod 223 again leaves the positioning hole 121 of the groove 12, and following the movement of the seat, the positioning rod 223 slides along the groove 12 to the next positioning hole 121, thereby returning the seat to a seating position.

This mechanism of rear seat C12 of motorcycle C enables the up and down adjustment and positioning of the seat C 12, but because of the large number of spare parts required and the complexity of the mechanism, there is a need for improvement. Also, the adjustment of the rear seat C 12 is made easy by the lack of a storage chamber underneath the seat C 1. When a motorcycle is equipped with a storage chamber under the rear seat, this adjustment mechanism is not feasible. Therefore, motorcycle manufactures should look into the development of a mechanism with easily built components that can facilitate the adjustment and positioning of the rear seat C12.

FR-A-2 802 155, owned by the same applicant of the present application, discloses a seat which has a locking plate, a positioning unit and a seat cushion, wherein the positioning unit is fixed to the back of the seat cushion and is connected to the locking plate so that the cushion can turn to form a seat or backrest, the locking plate has an end sector forming a positioning holder with at least one guide slot and a boring, and the positioning unit has a connecting plate, a shell, a positioning plate, a spring and a connecting block. However, the seat disclosed in this reference is too complicated and the structure of the seat cannot be used in a scooter with a compartment under a seat.

US-B1-6 332 621 discloses a skate board scooter includes a base, a head tube, a handlebar stem extended through the head tube, a connecting member extended from the head tube, and a locking pivoting member. Similarly, this reference cannot fulfill the decifiency of the FR-A-2 802 155 to provide a seat for use in a scooter with a compartment under the seat.

FR-A-2 820 475, also owned by the same applicant of the present application, discloses an attachment plate of a seat for motorcycles. Nevertheless, this reference is irrelevant to a rear seat for a motorcycle with a compartment under the seat.

GB-A-2 360 985 discloses a scooter which comprises a steering column 1 rotatably mounted to a support strut 2 pivotally coupled by a pin 35 to linking brackets 31, 32 mounted on the front end of a footboard. Similarly, this reference is irrelevant to a rear seat for a motorcycle with a compartment under the seat.

JP 2004 330984 discloses a rear seat according to the preamble of claim 1.

### SUMMARY OF THE INVENTON

This invention is related to the structure of a rear seat for motorcycles, and in particular to one which can be adjusted in position thereby providing convenience in use.

It is the primary object of the present invention to provide a rear seat arrangement, as described in claim 1, for a motorcycle having a front seat, a power unit under the front seat, and a compartment between the front seat and the power unit, wherein the rear seat is provided with an adjusting mechanism for enabling the rear seat to move to an upright position, the adjusting mechanism at least comprising a pivot member having a groove and positioning holes, a positioning rod having a head and a threaded portion, a resilient member sleeved over the positioning rod, and a cap engaged with an end of the threaded portion, whereby the rear seat can be adjusted in position and is adapted for use in motorcycles with a storage chamber under the seat.

The foregoing object and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a schematic view of a motorcycle with a prior art rear seat arrangement;
FIG 2 is an exploded view of the prior art rear seat;
FIGS. 3 and 4 illustrate how to adjust the position of the prior art rear seat;
FIG 5 illustrates a motorcycle with a rear seat arrangement according to the present invention;
FIG 6 is an exploded view of the rear seat according to the present invention;
FIGS. 7A, 7B, 8A and 8B illustrate the working principle of the present invention; and
FIG 9 illustrates how the rear seat according to the present invention is lifted to be a backrest and provide a space for mounting a storage container.

### DETAILED DESCRIPTION OF THE PREFERRED EMBODIMENT

For the purpose of promoting an understanding of the principles of the invention, reference will now be made to the embodiment illustrated in the drawings. Specific language will be used to describe same. It will, nevertheless, be understood that no limitation of the scope of the invention is thereby intended, alterations and further modifications in the illustrated device, and further applications of the principles of the invention as illustrated herein being contemplated as would normally occur to one skilled in the art to which the invention relates.

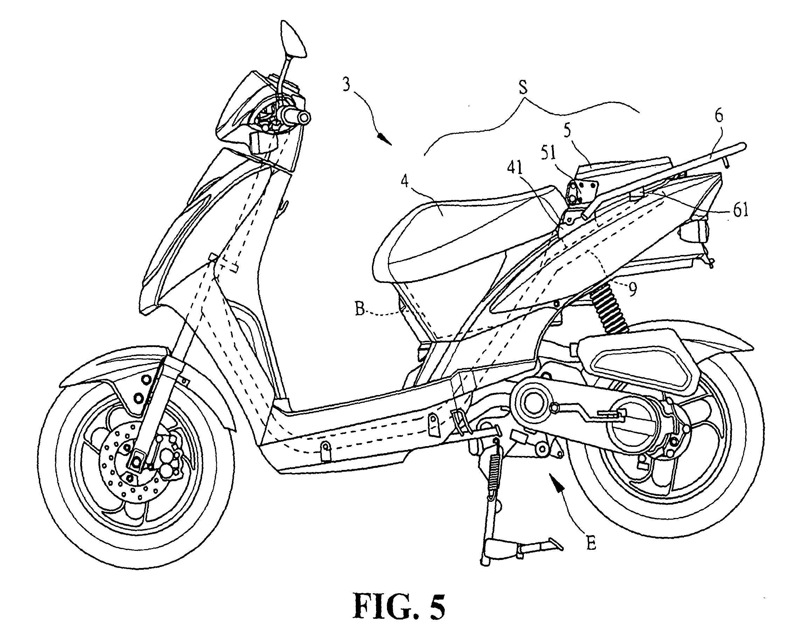

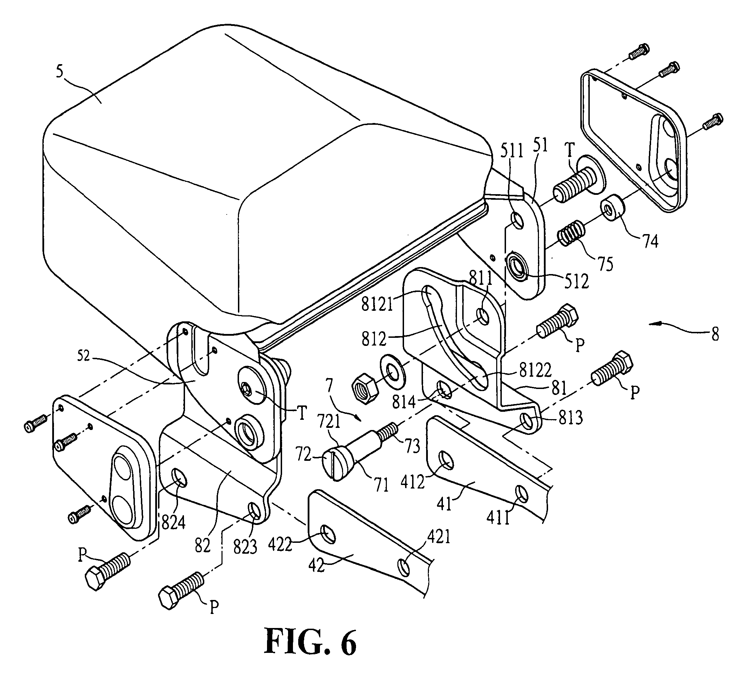

Referring to FIGS. 5 and 6, the motorcycle 3 comprises a power unit E, a sitting arrangement S, and a compartment B between the power unit E and the sitting arrangement S. The sitting portion S includes a front seat 4, a rear seat 5 and a rack 6.

The rear seat 5 is provided with two fixed plates 41 and 42 at two sides of its rear portion. The fixed plates 41 and 42 are fastened on a frame 9 of the motorcycle 3 and have through holes 411, 412, 421 and 422. The rear seat 5 is connected to the fixed plates 41 and 42 by screws P via the through holes 813, 814, 823 and 824 of two pivot members 81 and 82 of an adjusting mechanism 8.

The rack 6 is fixedly mounted on the frame 9 behind the front seat 4 and extends a little bit out of the taillight of the motorcycle 3 and structured to support the rear seat 5.

The rear seat 5 is provided at two sides with two connecting plates 51 and 52 with through holes 511. The connecting plates 51 and 52 are connected to the pivot members 81 and 82 of the adjusting mechanism 8 via two bolts T. The pivot members 81 and 82 are provided with through holes 811 aligned with the through holes 511 of the connecting plates 51 and 52. Hence, the rear seat 5 can be rotated with respect to the bolts T. The pivot member 81 is formed with a curved groove 812 having an upper positioning hole 8121 and a lower positioning hole 8122 the diameter of which is slightly larger than the width of the groove 812. Below the through hole 511 of the connecting plate 51 there is a hole 512 aligned with the groove 812. A positioning rod 7 which has a head 72, a conical portion 721 under the head 72, a body portion 71 under the conical portion 721 and a threaded portion 73 under the body portion 71 extends through the groove 812 and the hole 512 to engage with a cap 74. A spring 75 is sleeved over the threaded portion 73 so that the positioning rod 7 can be axially moved along the groove 812 and the hole 512. The outer diameter of the body portion 71 is slightly smaller than the width of the groove 812 so that the positioning rod 7 can be moved along the groove 812. The outer diameter of the head 72 is approximately equal to the inner diameter of the upper and lower positioning holes 8121 and 8122, but larger than the width of the groove 812, so that the head 72 can be fitted in the upper or lower positioning holes 8121 and 8122.

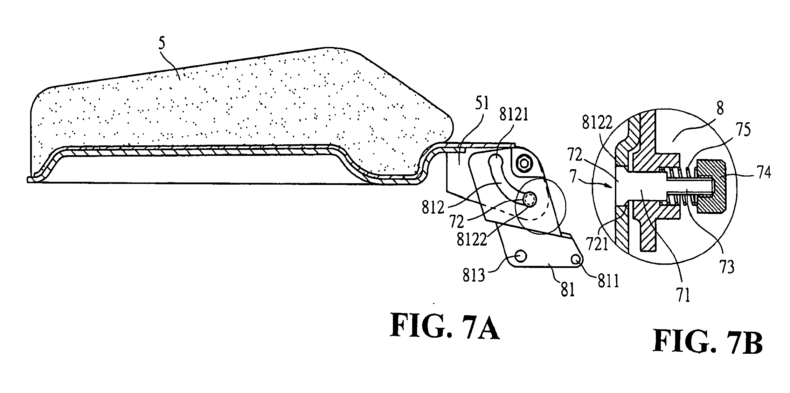

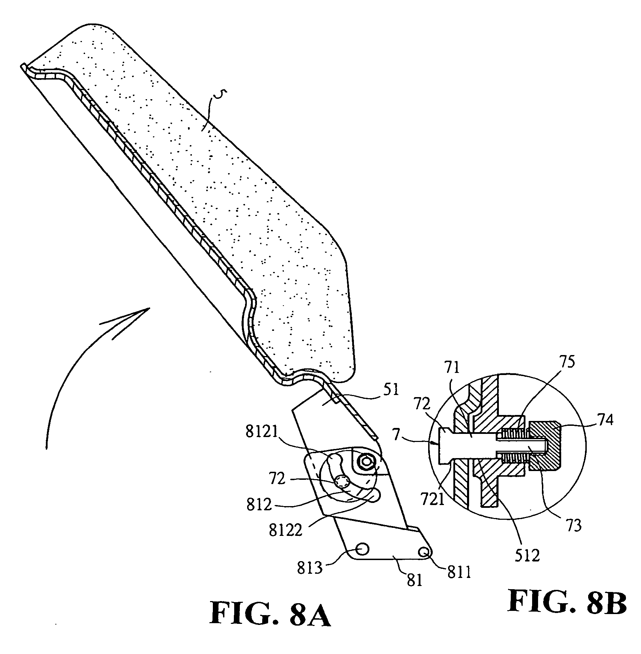

As shown in FIGS. 7A, 7B, 8A and 8B, when desired to move the rear seat 5 to an upright position by changing the positioning rod 8 from the lower positioning hole 8122 to the upper positioning hole 8121, the cap 74 is pressed to disengage the head 72 with the lower positioning hole 8122 and then the rear seat 5 is moved upwardly so that the positioning rod 7 will slide along the groove 812 until the body portion 71 is fitted in the upper positioning hole 8121. Thereafter, the cap 74 is released and the spring 75 pulls the head 72 of the positioning rod 7 into the upper positioning hole 8121. The conical portion 7121 is designed for facilitating the engagement of the head 72 with the upper or lower positioning holes 8121 and 8122. As the outer diameter of the head 72 is larger than the width of the groove 812, the rear seat 5 will be kept at an upright position. When desired to move the seat 5 back to the original position, the cap 74 is pressed to release the head 72 from the upper positioning hole 8121 and the rear seat 5 is moved downwardly thereby moving the positioning rod 7 to slide along the groove 812 until the positioning rod 7 is fitted in the lower positioning hole 8121 of the groove 812. Thereafter, the cap 74 is released and the spring 75 pulls the head 72 of the positioning rod 7 into the lower positioning hole 8121 thereby keeping the rear seat 5 at the original position.

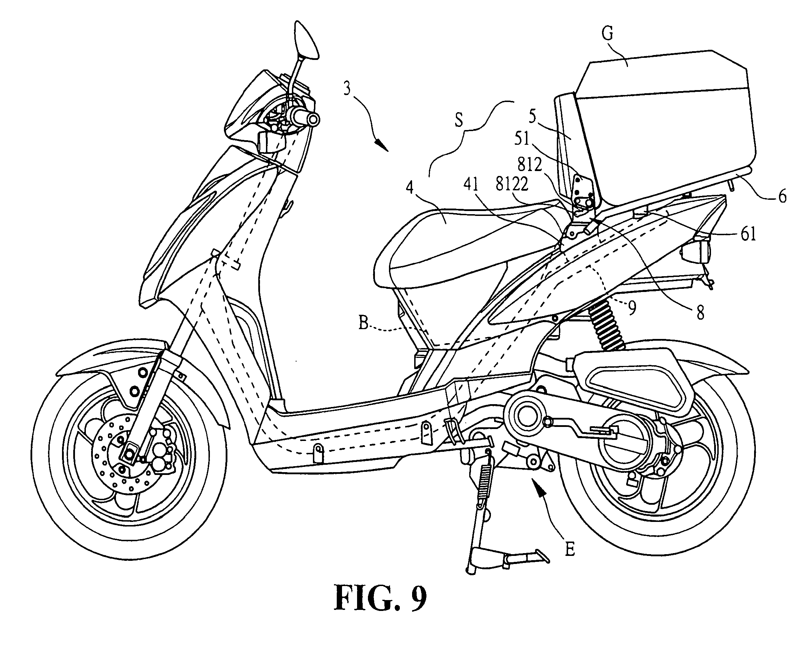

Referring to FIG 9, when desired to use the rack 6 to carry an article G, the cap 74 is pressed and the rear seat 5 is lifted to the predetermined position and then the cap 74 is released to keep the rear seat at an upright position thereby providing an ample space for receiving the article G

The present invention resides in the groove 812 with the upper and lower positioning holes 8121 and 8122 in association with the positioning rod 7 to enable the rear seat 5 to be converted from a horizontal position to an upright position thereby providing an ample space for carrying large articles as required.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the present invention as claimed.

## Claims

1. A rear seat (5) for a motorcycle. (3) having a front seat (4), a power unit (E) under said front seat (4), and a compartment (B) between said front seat (4) and said power unit (E), wherein said rear seat (5) is provided with an adjusting mechanism (8) for enabling said rear seat (5) to move to an upright position, a front end of said rear seat (5) is provided with a pair of connecting plates (51,52) said adjusting mechanism (8) is fastened on a frame (9) of said motorcycle (3) by fixed plates (41,42), and comprises a pivot member (81,82) having two ends connected with the fixed plates (41, 42) and the connecting plates (51,52), **characterised in that** said pivot member (81,82) has a groove (812) comprising a curved passage with two positioning holes (8121, 8122) having an outer diameter which is larger-than the width of said groove (812) said adjusting mechanism further comprising a positioning rod (7) having a head (72) and a threaded portion (73), a resilient member sleeved over said positioning rod (7), a cap (74) engaged with an end of said threaded portion (73), and wherein at least one of said connecting plates (51,52) is provided with a hole (512) aligned with thbe groove (812) such that the positioning rod (7) can extend through the groove (812) and the hole (512).

2. The rear seat (5) for a motorcycle (3) as claimed in claim 1, further comprising a rack (6) behind said rear seat (5).

## Patentansprüche

1. Ein Rücksitz (5) für ein Motorrad (3) mit einem Vordersitz (4), einer Antriebseinheit (E) unter diesem Vordersitz (4) und einem Fach (B) zwischen dem Vordersitz (4) und der Antriebseinheit (E), wobei besagter Rücksitz (5) mit einem Verstellmechanismus (8) verstehen ist, der es erlaubt ihn senkrecht zu stellen. Am vorderen Ende des Rücksitzes (5) ist ein Paar Halteplatten (51, 52) angebracht und der Verstellmechanismus (8) ist mit festen Platten (41, 42) am Rahmen (9) des Motorrads (3) befestigt. Er enthält Schwenkelemente (81, 82) die an ihren Enden mit den festen Platten (41, 42) bzw. den Halteplatten (51, 52) verbunden und **dadurch gekennzeichnet sind, daß** sie mit einem gekrümmten Schlitz (812) mit einer Positionierbohrung (8121, 8122) an jedem Ende versehen sind, wobei der Durchmesser der Positionierbohrungen (8121, 8122) größer als die Breite des Schlitzes (812) ist. Außerdem enthält der Verstellmechanismus (8) einen Positionierbolzen (7), der von einem nachgiebigen Element umgeben ist, mit einem Kopf (72) und einem Gewinde (73) und eine Kappe (74), die auf das Ende des Gewindes (73) aufgesetzt ist, wobei mindestens eine der Verbindungsplatten (51, 52) mit einer Bohrung (512) versehen ist, die so auf den Schlitz (812) ausgerichtet ist, daß der Positionierbolzen (7) gleichzeitig durch Schlitz (812) und Bohrung (512) gehen kann.

2. Der Rücksitz (5) für ein Motorrad (3) aus Anspruch 1, der zusätzlich ein Gestell (6) hinter dem Rücksitz (5) hat

## Revendications

1. Il s'agit d'un siège arrière (5) pour une motocyclette (3) ayant un siège avant (4), une unité électrique (E) sous ledit siège avant (4), et un compartiment (B) entre ledit siège avant (4) et ladite unité électrique (E), où ledit siège arrière (5) est équipé d'un mécanisme d'ajustement (8) pour permettre au siège arrière (5) de bouger vers une position supérieure, un bout avant dudit siège arrière (5) est équipé d'une paire de plateaux de connexion (51, 52). Ledit mécanisme d'ajustement (8) est serré sur une structure (9) de ladite motocyclette (3) par des plateaux fixés (41, 42), et comprend un membre pivot (81, 82) avec deux bouts connectés avec les plateaux fixés (41, 42) et les plateaux de connexion (51, 52), **caractérisé par** ce que le membre pivot (81, 82) a une fente (812) comprenant un passage incurvé avec deux trous de positionnement (8121, 8122) ayant un diamètre extérieur qui est plus grand que la largeur de ladite fente (812), ledit mécanisme d'ajustement comprenant une tige de positionnement (7) avec une tête (72) et une potion filetée (73), un membre élastique enfilé au-dessus de la tige de positionnement (7), un capuchon (74) engagé avec un bout de ladite portion filetée (73), et où au moins un des plateaux de connexion (51, 52) possède un trou (512) aligné avec la fente (812) de telle façon que la tige de positionnement (7) puisse s'étendre au travers de la fente (812) et du trou (512).

2. Siège arrière (5) pour une motocyclette (3) comme revendiqué dans la Revendication 1, comprenant un plateau (6) derrière le siège arrière (5).
